# FASCICULE DE BREVET EUROPEEN

(11) **EP 2 917 160 B1**
(45) Date de publication et mention de la délivrance du brevet: **19.10.2016**
(21) Numéro de dépôt: 13815018.0
(22) Date de dépôt: 25.10.2013
(51) Int. Cl.: C03C 17/42, G02B 1/10, G02C 7/02

(54) **ARTICLE D'OPTIQUE COMPORTANT UN REVÊTEMENT PRÉCURSEUR D'UN REVÊTEMENT ANTIBUÉE ET UNE COUCHE TEMPORAIRE À BASE DE FLUORURES MÉTALLIQUES OU DE COMPOSÉS COMPRENANT DU MAGNÉSIUM ET DE L'OXYGÈNE**
OPTISCHER ARTIKEL MIT EINER VORLÄUFERBESCHICHTUNG FÜR EINE ANTIBESCHLAGSBESCHICHTUNG UND EINE TEMPORÄRE BESCHICHTUNG EINES METALLFLUORIDS ODER EINER VERBINDUNG ENTHALTEND MAGNESIUM UND SAUERSTOFF
OPTICAL ARTICLE HAVING A PRECURSOR COATING OF AN ANTI-FOGGING COATING AND A TEMPORARY COATING OF A METAL FLUORIDE OR COMPOUNDS CONTAINING MAGNESIUM AND OXYGEN

(30) Priorité: 09.11.2012 FR 1260641
(43) Date de publication de la demande: 16.09.2015
(73) Titulaire: Essilor International (Compagnie Générale d'Optique), 94220 Charenton-le-Pont (FR)
(72) Inventeur: IGIER, Arnaud, F-77600 Bussy-Saint-Georges (FR); HENKY, Francis, F-21560 Couternon (FR); THEODEN, Alexis, F-94100 Saint-Maur-des-Fosses (FR); ROBIN, David, F-91330 Yerres (FR)
(74) Mandataire: Jacobacci Coralis Harle
(86) Numéro de dépôt international: PCT/FR2013/052554
(87) Numéro de publication internationale: WO 2014/072613

(56) Documents cités:
- WO-A1-03/057641
- US-A1- 2010 053 547
- US-A1- 2010 265 459
- US-A1- 2012 019 767
- US-A1- 2012 272 800

## Description

La présente invention s'intéresse à l'obtention d'un article d'optique, plus particulièrement d'une lentille ophtalmique, dont la surface a été modifiée afin de permettre une application efficace, facile et durable d'une solution antibuée temporaire. La présente invention concerne un tel article ainsi que son procédé de préparation.

De nombreux supports, tels que les matières plastiques et le verre, présentent l'inconvénient de se recouvrir de buée lorsque la température de leur surface descend au-dessous du point de rosée de l'air ambiant. C'est le cas notamment du verre que l'on utilise pour former des vitrages pour véhicules de transport ou le bâtiment, des miroirs, des lentilles ophtalmiques telles que des verres de lunettes, etc. La formation de buée sur ces surfaces entraîne une diminution de la transparence, due à la diffusion de la lumière par les gouttes d'eau, ce qui peut provoquer une gêne importante.

Pour éviter la formation de buée dans un environnement très humide, c'est-à-dire la condensation de minuscules gouttelettes d'eau sur un support, il est possible de déposer sur la surface externe de ce support des revêtements hydrophiles, ayant un faible angle de contact statique avec l'eau (typiquement 10° ou moins). Ces revêtements antibuée permanents, dont les propriétés hydrophiles découlent de composés hydrophiles liés de façon permanente à un autre revêtement ou support, agissent comme des éponges vis-à-vis de la buée et permettent aux gouttelettes d'eau d'adhérer à la surface du support en formant un film très fin donnant une sensation de transparence. Par suite de l'absorption d'eau, ils gonflent, se ramollissent et deviennent moins résistants mécaniquement.

Une autre solution, permettant de combiner propriétés antireflet et antibuée, consiste à utiliser une couche mince poreuse de bas indice de réfraction, constituée en partie de tensioactifs, lesquels permettent à la couche d'acquérir des propriétés antibuée permanentes.

Une alternative plus intéressante aux revêtements antibuée permanents consiste à obtenir un revêtement antibuée par application d'une solution hydrophile temporaire à la surface d'un revêtement précurseur d'un revêtement antibuée.

Il a été décrit dans les demandes de brevet internationales WO 2011/080472 et PCT/FR2012/051044 le dépôt, sur la surface externe d'un article d'optique revêtu d'un revêtement comportant à sa surface des groupes silanols, d'un revêtement hydrophile précurseur d'un revêtement antibuée obtenu par greffage d'un composé possédant un groupe polyoxyalkylène, notamment un organosilane. Le revêtement antibuée proprement dit, qui est un revêtement temporaire, est obtenu après application à la surface du revêtement précurseur d'un surfactant. Avant cette application de surfactant, l'article d'optique peut être débordé (taillé) de façon satisfaisante si l'on a déposé à sa surface une couche temporaire comprenant au moins 50 % en masse de silice. Cette couche temporaire à base de silice assure l'adhésion entre l'organe de fixation et la surface de l'article d'optique, ce qui permet de le maintenir fermement pendant son taillage en évitant tout glissement. Elle est éliminée à l'issue de l'opération de débordage.

Dans ces demandes, le revêtement précurseur du revêtement antibuée a typiquement une épaisseur inférieure ou égale à 5 nm. Cette épaisseur finale peut être obtenue en déposant directement la quantité adéquate de composé organosilane.

Cependant, les inventeurs ont constaté qu'il était préférable de former le revêtement précurseur du revêtement antibuée en déposant un excès de composé hydrophile à la surface du revêtement de la lentille, et en éliminant l'excès de ce composé déposé mais non greffé, de façon à parvenir à la même épaisseur finale désirée. Cette façon de procéder garantit la performance antibuée des verres traités. Les inventeurs ont en effet constaté que lorsque l'on formait directement une couche de composé hydrophile greffé ayant une épaisseur qui ne nécessite pas une élimination d'un excès de composé hydrophile, on pouvait dans certains cas obtenir un dépôt irrégulier et un revêtement précurseur de revêtement antibuée dont la surface ne possède pas une affinité suffisante vis-à-vis d'une solution liquide de tensioactif, ce qui conduit à un revêtement ne possédant pas les propriétés antibuée recherchées, généralement moins durable. De tels problèmes de reproductibilité doivent impérativement être évités afin que le procédé de production soit industrialisable.

Déposer un surplus de composé hydrophile à la surface du revêtement de la lentille est une solution technique présentant elle aussi des inconvénients. L'élimination directe de l'excès de composé hydrophile non greffé, qui se fait généralement par essuyage manuel, est longue, difficile et donc douloureuse pour l'opérateur, ce qui a un impact négatif sur la productivité, son coût et la motivation de l'opérateur. La couche de composé hydrophile étant transparente, il n'est pas possible de suivre visuelllement son élimination. Des problèmes cosmétiques liés à l'élimination difficile peuvent également survenir. L'élimination directe de l'excès de composé hydrophile non greffé est donc une solution que l'on souhaiterait éviter lors de la fabrication industrielle des lentilles.

L'objectif de la présente invention est la préparation d'un article d'optique, comportant un revêtement précurseur de revêtement antibuée, d'épaisseur préférentiellement supérieure à 3 nm, obtenu par dépôt d'un excès de composé hydrophile dont le processus d'élimination serait plus simple, plus efficace, plus rapide et plus confortable pour l'opérateur, et qui pourrait être suivi visuellement.

L'invention vise également la mise au point d'un procédé de débordage d'articles d'optique revêtus d'un revêtement précurseur de revêtement antibuée, qui soit fiable et garantisse le succès de l'opération de débordage, permettant d'éviter tout problème de glissement de la lentille pendant l'opération de débordage en question.

Les objectifs de l'invention sont atteints grâce à l'utilisation d'une couche temporaire dont la composition a été spécialement conçue pour résoudre le problème posé. Elle est destinée à être éliminée rapidement après son dépôt à la surface du revêtement précurseur du revêtement antibuée "brut" réalisé (déposé en excès), et son élimination permet de retirer simultanément l'excès de composé hydrophile constituant ledit revêtement précurseur "brut", et ce, de façon surprenante, beaucoup plus facilement et efficacement que le retrait direct de l'excès de ce composé hydrophile.

Ainsi, la présente invention concerne un article d'optique comprenant un substrat ayant au moins une surface principale et un revêtement précurseur d'un revêtement antibuée, ledit revêtement précurseur étant en contact direct soit avec ladite surface principale du substrat, soit avec un premier revêtement, lorsque ladite surface principale du substrat est revêtue d'un premier revêtement, ledit revêtement précurseur étant formé par dépôt sur le substrat ou lorsqu'il est présent sur le premier revêtement d'au moins un composé A hydrophile et comprenant une partie interne dans laquelle ledit composé A est greffé au substrat ou lorsqu'il est présent au premier revêtement, et une partie externe éliminable par lavage et/ou essuyage, résultant du dépôt du composé A, ledit revêtement précurseur étant revêtu d'une couche temporaire, en contact direct avec lui, comprenant au moins un composé choisi parmi les fluorures métalliques et les composés comprenant du magnésium et de l'oxygène. Les composés comprenant du magnésium et de l'oxygène comportent de préférence au moins une liaison entre le magnésium et l'oxygène et sont de préférence des oxydes de magnésium. La couche temporaire comprend de préférence au moins 70%, de préférence au moins 80%, mieux au moins 90% en masse par rapport à la masse totale de la couche temporaire d'au moins un composé choisi parmi les fluorures métalliques et les composés comprenant du magnésium et de l'oxygène.

Dans le cas où une surface principale de l'article d'optique est revêtue d'un premier revêtement, le revêtement précurseur du revêtement antibuée forme un "second revêtement".

L'invention concerne également un procédé de fabrication et de débordage d'un article d'optique comprenant un revêtement précurseur d'un revêtement antibuée faisant intervenir l'article d'optique ci-dessus.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1. De même une couche dite "externe " est plus éloignée du substrat qu'une couche dite "interne".

Par "revêtement antibuée", on entend dans la présente demande un revêtement qui, lorsqu'un substrat en verre transparent revêtu de ce revêtement est placé dans des conditions générant de la buée sur ledit substrat non équipé dudit revêtement, permet immédiatement une acuité visuelle > 6/10^{ème} pour un observateur observant à travers le verre revêtu une échelle d'acuité visuelle située à 5 mètres de distance. Un test permettant d'évaluer les propriétés antibuée d'un revêtement est décrit dans la partie expérimentale. Dans des conditions génératrices de buée, les revêtements antibuée peuvent soit ne pas présenter de buée à leur surface (pas de distorsion visuelle dans le cas idéal, ou bien distorsion visuelle mais acuité visuelle > 6/10^{ème} dans les conditions de mesure indiquées ci-dessus), soit présenter de la buée à leur surface mais tout de même permettre, malgré la perturbation de la vision causée par la buée, une acuité visuelle > 6/10^{ème} dans les conditions de mesure indiquées ci-dessus. Un revêtement non antibuée ne permet pas une acuité visuelle > 6/10^{ème} tant qu'il est exposé à des conditions générant de la buée et présente généralement un voile de condensation dans les conditions de mesure indiquées ci-dessus.

Par "verre antibuée", on entend dans la présente demande un verre équipé d'un "revêtement antibuée" tel que défini ci-dessus.

Ainsi, le précurseur du revêtement antibuée selon l'invention, qui est un revêtement hydrophile, n'est pas considéré comme étant un revêtement antibuée au sens de l'invention. Effectivement, ce précurseur de revêtement antibuée ne permet pas une acuité visuelle > 6/10^{ème} dans les conditions de mesure indiquées ci-dessus.

Par revêtement antibuée temporaire, on entend un revêtement antibuée obtenu après l'application d'une solution liquide contenant au moins un agent conférant des propriétés antibuée, préférentiellement un tensioactif, à la surface d'un revêtement précurseur dudit revêtement antibuée. La durabilité d'un revêtement antibuée temporaire est généralement limitée par des essuyages de sa surface, les molécules de tensioactifs n'étant pas accrochées de façon permanente à la surface du revêtement mais simplement adsorbées plus ou moins durablement.

L'article d'optique préparé selon l'invention comprend un substrat, de préférence transparent, ayant des faces principales avant et arrière, l'une au moins desdites faces principales, de préférence les deux faces principales, comprenant optionnellement un premier revêtement comportant de préférence à sa surface des groupes silanols. Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

Bien que l'article selon l'invention puisse être un article d'optique quelconque susceptible d'être confronté à une formation de buée, tel qu'un écran, un vitrage pour l'industrie automobile ou du bâtiment, ou un miroir, il est de préférence une lentille optique, mieux une lentille ophtalmique, pour lunettes, ou une ébauche de lentille optique ou ophtalmique.

Ceci exclut des articles tels que des lentilles intraoculaires en contact avec des tissus vivants ou des lentilles de contact, qui ne sont intrinsèquement pas confrontées au problème de formation de buée.

Le premier revêtement de l'invention, qui de préférence comporte à sa surface des groupes silanols, peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article d'optique selon l'invention peut être un verre minéral ou organique, par exemple un verre organique en matière plastique thermoplastique ou thermodurcissable.

Des classes de substrats particulièrement préférées sont les poly(thiouréthanes), les polyépisulfures et les résines résultant de la polymérisation ou (co)polymérisation de bis allyl carbonates d'alkylène glycols. Ces derniers sont vendus, par exemple, sous la dénomination commerciale CR-39^{®} par la société PPG Industries (lentilles ORMA^{®} ESSILOR).

Dans certaines applications, il est préférable que la surface principale du substrat soit revêtue d'un ou plusieurs revêtements fonctionnels préalablement au dépôt du premier revêtement. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré, en particulier une couche de primaire antichoc revêtue d'une couche anti-abrasion et/ou anti-rayures.

Le premier revêtement peut être déposé sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtement durs à base de poly(méth)acrylates ou de silanes comprenant généralement une ou plusieurs charges minérales destinées à augmenter la dureté et/ou l'indice de réfraction du revêtement une fois durci. Par (méth)acrylate, on entend un acrylate ou un méthacrylate.

Parmi les revêtements recommandés dans la présente invention, on peut citer les revêtements à base d'hydrolysats d'époxysilanes tels que ceux décrits dans les brevets EP 0614957, US 4,211,823 et US 5,015,523. L'épaisseur du revêtement anti-abrasion et/ou anti-rayures varie généralement de 2 à 10 µm, préférentiellement de 3 à 5 µm.

Préalablement au dépôt du revêtement anti-abrasion et/ou anti-rayures, il est possible de déposer sur le substrat un revêtement de primaire améliorant la résistance au choc et/ou l'adhésion des couches ultérieures dans le produit final. Ces revêtements peuvent être toute couche de primaire antichoc classiquement utilisée pour les articles en matériau polymère transparent, tels que des lentilles ophtalmiques, et son décrits plus en détail dans la demande WO 2011/080472.

Le premier revêtement selon l'invention peut notamment être un revêtement anti-abrasion et/ou anti-rayure, ou, selon le mode de réalisation préféré, un revêtement antireflet monocouche ou un revêtement antireflet multicouche. Ce premier revêtement comporte de préférence à sa surface des groupes silanols.

Par revêtement comprenant à sa surface des groupes silanols, on entend un revêtement qui possède naturellement à sa surface des groupes silanols, ou bien un revêtement dont les groupes silanols ont été créés après qu'il a été soumis à un traitement d'activation de surface. Ce revêtement est donc un revêtement à base de siloxanes ou de silice, par exemple, sans limitation, une couche de silice, un revêtement sol-gel, à base notamment d'organosilanes tels que des alcoxysilanes, ou un revêtement à base de colloïdes de silice. Il peut s'agir notamment d'un revêtement anti-abrasion et/ou anti-rayure, ou d'un revêtement antireflet monocouche ou d'un revêtement antireflet multicouche dont la couche externe possède à sa surface des groupes silanols. Par couche externe d'un empilement, on entend la couche la plus éloignée du substrat.

Le traitement d'activation de surface éventuellement employé pour créer des groupes silanols ou du moins augmenter leur proportion à la surface d'un revêtement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants. Plusieurs de ces traitements peuvent être combinés.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le revêtement comportant à sa surface des groupes silanols est de préférence une couche de bas indice de réfraction à base d'oxyde de silicium, préférentiellement de silice (comprenant de la silice), idéalement consiste en une couche de silice (SiO₂), généralement obtenue par dépôt en phase vapeur. Ladite couche à base de silice a de préférence une épaisseur inférieure ou égale à 500 nm, mieux de 2 à 110 nm, préférentiellement variant de 5 à 100 nm.

Le revêtement comportant à sa surface des groupes silanols comprend de préférence au moins 70 % en masse de SiO₂, mieux au moins 80 % en masse et mieux encore au moins 90 % en masse de SiO₂. Comme il a été dit, dans une réalisation optimale, il comprend 100 % en masse de silice.

Le revêtement comportant à sa surface des groupes silanols peut également être un revêtement sol-gel à base de silanes tels que des alcoxysilanes, par exemple le tétraéthoxysilane ou des organosilanes tels que le γ-glycidoxypropyltriméthoxysilane. Un tel revêtement est obtenu par dépôt par voie liquide, en utilisant une composition liquide contenant un hydrolysat de silanes et éventuellement des matériaux colloïdaux de haut (> 1,55, préférentiellement > 1,60, mieux > à 1,70) ou de bas (≤ 1,55) indice de réfraction. Un tel revêtement dont les couches comprennent une matrice hybride organique/inorganique à base de silanes dans laquelle sont dispersés des matériaux colloïdaux permettant d'ajuster l'indice de réfraction de chaque couche est décrit par exemple dans le brevet FR 2858420.

Selon un mode de réalisation de l'invention, le revêtement comportant à sa surface des groupes silanols est une couche à base de silice déposée sur un revêtement anti-abrasion, de préférence déposée directement sur ce revêtement anti-abrasion.

Selon un autre mode de réalisation de l'invention, qui constitue le mode de réalisation préféré, l'article d'optique selon l'invention comporte un revêtement antireflet. Lorsqu'un tel revêtement est présent, il constitue généralement le premier revêtement au sens de l'invention. Ce revêtement antireflet peut être tout revêtement antireflet classiquement utilisé dans le domaine de l'optique, en particulier de l'optique ophtalmique.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article/air sur une portion relativement large du spectre visible.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI).

Dans la présente demande, une couche du revêtement antireflet est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement antireflet est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 550 nm.

Les couches HI et BI sont respectivement des couches de haut indice de réfraction et de bas indice de réfraction classiques, bien connues dans la technique, dont la constitution, l'épaisseur et le mode de dépôt sont décrits notamment dans la demande WO 2010/109154.

Préférentiellement, l'épaisseur totale du revêtement antireflet est inférieure à 1 micromètre, mieux inférieure ou égale à 800 nm et mieux encore inférieure ou égale à 500 nm. L'épaisseur totale du revêtement antireflet est généralement supérieure à 100 nm, de préférence supérieure à 150 nm.

Avant la formation du précurseur du revêtement antibuée sur le premier revêtement ou sur le substrat nu, il est courant de soumettre la surface de ce premier revêtement ou du substrat à un traitement d'activation physique ou chimique, destiné à augmenter l'adhésion du précurseur du revêtement antibuée. Ces traitements peuvent être choisis parmi ceux décrits précédemment pour l'activation du revêtement comprenant à sa surface des groupes silanols.

Selon l'invention, le premier revêtement, lorsqu'il est présent, est directement en contact avec le revêtement précurseur du revêtement antibuée. Selon un autre mode de réalisation, le substrat est lui-même directement en contact avec le revêtement précurseur du revêtement antibuée, qui va maintenant être décrit.

Par "précurseur d'un revêtement antibuée", on entend dans la présente demande un revêtement qui, par application à sa surface d'une solution liquide contenant un surfactant de façon à former un film, constitue un revêtement antibuée au sens de l'invention. L'ensemble constitué par le revêtement précurseur et le film de solution à base de surfactant constitue le revêtement antibuée proprement dit.

Le revêtement précurseur du revêtement antibuée est formé par dépôt en quantité suffisante sur le premier revêtement ou sur le substrat d'au moins un composé A hydrophile.

Par composé hydrophile, on entend un composé dont un film formé à la surface d'un substrat présente un angle de contact statique avec l'eau inférieur ou égal à 60°, de préférence inférieur ou égal à 55°, mieux inférieur ou égal à50°. Dans la présente demande, les angles de contact sont mesurés de la façon décrite dans la demande WO 2008/053020.

Le composé A est un composé filmogène. Il comporte de préférence au moins un groupe choisi parmi les groupes polyoxyalkylène, polyamine, polyol (groupe polyhydroxylé, par exemple un groupe polysaccharide ou polyglycérol), polyéther (par exemple un éther de polyol), de préférence un groupe polyoxyalkylène. Le composé A comporte généralement au moins un groupe capable d'établir une liaison covalente avec un groupe fonctionnel présent sur la surface externe du substrat ou du premier revêtement sur lequel il sera greffé, ledit groupe fonctionnel étant de préférence un groupe silanol dans le cas où un premier revêtement est présent. Ce groupe, qui est un groupe réactif, peut être, sans limitation, l'un des groupes suivants : un groupe isocyanate, acrylate, méthacrylate, halogenoalkyle, acide carboxylique ou sulfonique, chlorure d'acyle, chlorosulfonyle, chloroformiate, ester, un atome de silicium portant au moins un groupe hydrolysable, ou un groupe contenant une fonction époxy tel que le groupe glycidyle, préférentiellement un atome de silicium porteur d'au moins un groupe hydrolysable.

Le composé A est de préférence un composé organosilane, mieux un composé organosilane possédant au moins un atome de silicium porteur d'au moins un groupe hydrolysable, encore mieux un composé organosilane possédant un groupe polyoxyalkylène et au moins un atome de silicium porteur d'au moins un groupe hydrolysable.

De préférence, sa chaîne polyoxyalkylène est fonctionnalisée à une seule extrémité ou à ses deux extrémités, idéalement à une seule extrémité, par au moins un, de préférence un seul, groupe comportant au moins un atome de silicium porteur d'au moins un groupe hydrolysable. Ce composé organosilane comprend de préférence un atome de silicium porteur d'au moins deux groupes hydrolysables, de préférence trois groupes hydrolysables. De préférence, il ne comprend pas de groupe uréthane. Il s'agit préférentiellement d'un composé de formule :

R¹YₘSi(X)₃₋ₘ (I)

dans laquelle les groupes Y, identiques ou différents, sont des groupes organiques monovalents liés au silicium par un atome de carbone, les groupes X, identiques ou différents, sont des groupes hydrolysables ou des groupes hydroxyle, R¹ est un groupe comprenant une fonction polyoxyalkylène, m est un entier égal à 0, 1 ou 2. De préférence m = 0.

Les groupes X sont préférentiellement choisis parmi les groupes alcoxy -O-R³, en particulier alcoxy en C₁-C₄, acyloxy -O-C(O)R⁴ où R⁴ est un radical alkyle, préférentiellement en C₁-C₆, de préférence méthyle ou éthyle, halogènes tels que CI et Br ou triméthylsiloxy (CH₃)₃SiO-, et les combinaisons de ces groupes. De préférence, les groupes X sont des groupes alcoxy, et en particulier méthoxy ou éthoxy, et mieux éthoxy.

Le groupe Y, présent lorsque m n'est pas nul, est de préférence un groupe hydrocarboné, saturé ou non, de préférence en C₁-C₁₀ et mieux en C₁-C₄, par exemple un groupe alkyle, tel que méthyle ou éthyle, un groupe vinyle, un groupe aryle, par exemple phényle, éventuellement substitué, notamment par un ou plusieurs groupes alkyle en C₁-C₄. De préférence Y représente le groupe méthyle.

Selon un mode de réalisation préféré, le composé de formule I comprend un groupe trialcoxysilyle tel qu'un groupe triéthoxysilyle ou triméthoxysilyle.

Le groupe polyoxyalkylène du composé organosilane (groupe R¹) comprend de préférence moins de 80 atomes de carbone, mieux moins de 60 atomes de carbone, et encore mieux moins de 50 atomes de carbone. Le groupe R¹ vérifie de préférence ces mêmes conditions.

Le groupe R¹ a généralement pour formule -L-R², où L est un groupe divalent lié à l'atome de silicium des composés de formule I ou II par un atome de carbone, et R² est un groupe comprenant un groupe polyoxyalkylène lié au groupe L par l'intermédiaire d'un atome d'oxygène, cet atome d'oxygène étant compris dans le groupe R². Des exemples non limitatifs de groupes L sont les groupes alkylène linéaires ou ramifiés, éventuellement substitués, cycloalkylène, arylène, carbonyle, amido, ou des combinaisons de ces groupes comme les groupes cycloalkylènealkylène, biscycloalkylène, biscycloalkylènealkylène, arylènealkylène, bisphénylène, bisphénylènealkylène, amido alkylène, dont un exemple est le groupe CONH(CH₂)₃, ou bien les groupes -OCH₂CH(OH)CH₂- et -NHC(O)-. les groupes L préférés sont les groupes alkylène, de préférence linéaire, ayant de préférence 10 atomes de carbone ou moins, mieux 5 atomes de carbone ou moins, par exemple les groupe éthylène et propylène.

Les groupes R² préférés comprennent un groupe polyoxyéthylène -(CH₂CH₂O)ₙ-, polyoxypropylène, ou des combinaisons de ces groupes.

Les organosilanes de formule I préférés sont des composés de formule II suivante :

Yₘ(X)₃₋ₘSi(CH₂)_{n'}-(L')_{m'}-(OR)ₙ-O-(L")_{m"}-R' (II)

où R' est un atome d'hydrogène, un groupe acyle ou un groupe alkyle, linéaire ou ramifié, éventuellement substitué par un ou plusieurs groupes fonctionnels, et pouvant comporter en outre une ou plusieurs doubles liaisons, R est un groupe alkylène linéaire ou ramifié, de préférence linéaire, par exemple un groupe éthylène ou propylène, L' et L" sont des groupes divalents, X, Y et m sont tels que définis ci-dessus, n' est un entier allant de 1 à 10, de préférence de 1 à 5, n est un entier allant de 2 à 50, de préférence de 5 à 30, mieux de 5 à 15, m' est égal à 0 ou 1, de préférence 0, m" est égal à 0 ou 1, de préférence 0.

Les groupes L' et L", lorsqu'ils sont présents, peuvent être choisis parmi les groupes divalents L précédemment décrits et représentent de préférence le groupe -OCH₂CH(OH)CH₂-ou le groupe -NHC(O)-. Dans ce cas, les groupes -OCH₂CH(OH)CH₂- ou -NHC(O)- sont connectés aux groupes adjacents (CH₂)_{n'} (dans le cas d'un groupe L') et R' (dans le cas d'un groupe L") par l'intermédiaire de leur atome d'oxygène (pour le groupe -OCH₂CH(OH)CH₂-) ou par l'intermédiaire de leur atome d'azote (pour le groupe -NHC(O)-).

Le groupe -O-(L")_{m"}-R' est de préférence un groupe alcoxy (m" = 0, R' = alkyl), idéalement un groupe méthoxy.

De préférence, les composés de formule (I) ou (II) comprennent un seul atome de silicium porteur d'au moins un groupe hydrolysable.

Selon un mode de réalisation, m = 0 et les groupes hydrolysables X désignent des groupes méthoxy ou éthoxy, n' est de préférence égal à 3. Selon un autre mode de réalisation, R' désigne un groupe alkyle possédant moins de 5 atomes de carbone, de préférence le groupe méthyle. R' peut aussi désigner un groupe acyle aliphatique ou aromatique, notamment le groupe acétyle.

Enfin, R' peut désigner un groupe trialcoxysilylalkylène ou trihalogénosilylalkylène tel que le groupe -(CH₂)_{n"}Si(R⁵)₃ où R⁵ est un groupe hydrolysable tel que les groupes X définis précédemment et n" est un entier tel que le groupe n' défini précédemment. Un exemple d'un tel groupe R' est le groupe -(CH₂)₃Si(OC₂H₅)₃. Dans ce mode de réalisation, le composé organosilane comporte deux atomes de silicium porteurs d'au moins un groupe hydrolysable.

Selon des modes de réalisation préférés, n est égal à 3, ou bien varie de 6 à 9, de 9 à 12, de 21 à 24, ou de 25 à 30, de préférence de 6 à 9.

Comme exemples de composés de formule II, on peut citer les 2-[méthoxy(polyéthylèneoxy)propyl]triméthoxysilane de formules CH₃O-(CH₂CH₂O)₆₋₉-(CH₂)₃Si(OCH₃)₃ (III) et CH₃O-(CH₂CH₂O)₉₋₁₂-(CH₂)₃Si(OCH₃)₃ (IV), commercialisés par Gelest, Inc. ou ABCR, le composé de formule CH₃O-(CH₂CH₂O)₃-(CH₂)₃Si(OCH₃)₃ (VIII), les composés de formule CH₃O-(CH₂CH₂O)ₙ-(CH₂)₃Si(OC₂H₅)₃ où n= 21-24, les 2-[méthoxy(polyéthylèneoxy)propyl] trichlorosilanes, le 2-[acétoxy(polyéthylèneoxy)propyl] triméthoxysilane de formule CH₃C(O)O-(CH₂CH₂O)₆₋₉-(CH₂)₃Si(OCH₃)₃, le 2-[acétoxy(polyéthylèneoxy)propyl] triéthoxysilane de formule CH₃C(O)O-(CH₂CH₂O)₆₋₉-(CH₂)₃Si(OC₂H₅)₃, le 2-[hydroxy(polyéthylèneoxy)propyl]triméthoxysilane de formule HO-(CH₂CH₂O)₆₋₉-(CH₂)₃Si(OCH₃)₃, le 2-[hydroxy(polyéthylèneoxy)propyl]triéthoxysilane de formule HO-(CH₂CH₂O)₆₋₉-(CH₂)₃Si(OC₂H₅)₃, les composés de formules HO-(CH₂CH₂O)₈₋₁₂-(CH₂)₃Si(OCH₃)₃ et HO-(CH₂CH₂O)₈₋₁₂-(CH₂)₃Si(OC₂H₅)₃, l'oxyde de polypropylène-bis[(3-méthyldiméthoxysilyl)propyl], et les composés à deux têtes siloxanes tels que l'oxyde de polyéthylène-bis[(3-triéthoxysilylpropoxy)-2-hydroxypropoxy] de formule (V), l'oxyde de polyéthylène-bis[(N,N'-triéthoxysilylpropyl)-aminocarbonyl] de formule (VI) avec n = 10-15 et l'oxyde de polyéthylène-bis(triéthoxysilylpropyl) de formule (VII) :

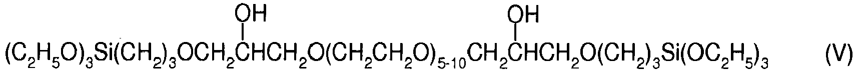

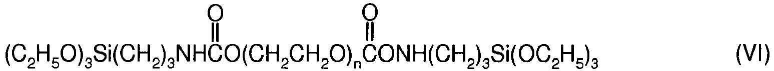

(C₂H₅O)₃Si(CH₂)₃O(CH₂CH₂O)₂₅₋₃₀(CH₂)₃Si(OC₂H₅)₃ (VII)

Les composés de formule II préférés sont les [alcoxy (polyalkylènoxy) alkyl]trialcoxysilanes ou leurs analogues trihalogénés (m = m' = m" = 0, R' = alcoxy).

De préférence, le composé A selon l'invention ne possède pas d'atome de fluor. Typiquement, le taux massique de fluor dans le revêtement précurseur du revêtement antibuée est inférieur à 5 %, de préférence inférieur à 1 % en poids et mieux de 0 %.

De préférence, la masse molaire du composé A selon l'invention va de 400 à 4000 g/mol, de préference de 400 à 1500 g/mol, mieux de 400 à 1200 g/mol, et encore mieux de 400 à 1000 g/mol.

Selon un mode de réalisation de l'invention, le précurseur du revêtement antibuée comprend plus de 80 % en masse de composé A selon l'invention, par rapport à la masse totale du précurseur du revêtement antibuée, de préférence plus de 90%. Selon un mode de réalisation, le précurseur de revêtement antibuée consiste en une couche dudit composé A.

De préférence, le précurseur de revêtement antibuée de l'invention contient moins de 5 % en masse d'oxyde métallique ou de métalloïde (par exemple de silice ou d'alumine) par rapport à la masse totale du revêtement, mieux n'en comprend pas. Lorsque le composé organosilane utilisé pour la formation du revêtement antibuée est déposé sous vide, de préférence aucun oxyde métallique n'est co-évaporé avec lui, selon la technique de la co-évaporation d'au moins un composé organique et d'au moins un composé inorganique décrite dans la demande EP 1324078.

Selon l'invention, le dépôt du composé A forme un revêtement précurseur d'un revêtement antibuée comprenant une partie interne dans laquelle ledit composé A est greffé au premier revêtement ou au substrat, de façon permanente (et non par simple adsorption), et une partie externe éliminable par lavage et/ou essuyage.

Pour parvenir à une telle structure, il est nécessaire de déposer un excès de composé A à la surface du premier revêtement ou du substrat, comportant de préférence des groupes silanols. Le réglage des paramètres de dépôt pour parvenir à une telle configuration est à la portée de l'homme du métier.

Par excès, on entend une quantité de composé A supérieure à la quantité qui serait nécessaire pour former une couche de composé A greffée à la surface du premier revêtement ou du substrat.

Ainsi, le revêtement précurseur du revêtement antibuée est un revêtement ayant de préférence une épaisseur (avant essuyage) supérieure ou égale à 3 nm, mieux ≥ 5 nm, encore mieux ≥ 8 nm, et idéalement ≥ 10 nm. Son épaisseur est préférentiellement inférieure à 100 nm, mieux ≤ 50 nm et encore mieux ≤ 20 nm. Elle va typiquement de 3 à 100 nm, de préférence de 5 à 50 nm.

Le dépôt du composé A à la surface du premier revêtement ou du substrat selon l'invention peut être réalisé selon des techniques habituelles, de préférence par dépôt en phase gazeuse ou en phase liquide, idéalement en phase gazeuse, par évaporation sous vide. Le composé A peut être au préalable dissous dans un solvant avant d'être évaporé, pour mieux contrôler la vitesse d'évaporation et de dépôt.

Selon l'un des modes de réalisation de l'invention, le revêtement précurseur est déposé par application d'une composition comprenant un hydrolysat du composé A, dans le cas où celui-ci est un organosilane. Dans ce cas, il est recommandé d'appliquer la composition assez rapidement après hydrolyse, typiquement moins de 2 heures, préférentiellement moins de 1 heure, mieux moins de 30 minutes après avoir procédé à l'hydrolyse (par ajout d'une solution aqueuse acide, typiquement de HCl), pour limiter la formation de prépolymères siloxanes avant greffage. Il est toutefois préféré de déposer ledit organosilane par voie gazeuse.

La partie externe du revêtement précurseur du revêtement antibuée est éliminable par lavage et/ou essuyage, ce qui signifie qu'elle serait éliminée en la soumettant notamment à un lavage avec de l'eau savonneuse (renfermant un tensioactif) au moyen d'une éponge puis avec de l'eau désionisée, et/ou à un essuyage pendant typiquement 20 secondes ou moins, au moyen d'un tissu CEMOI™, Wypali™ ou Selvith™ sec ou éventuellement imprégné d'alcool, typiquement de l'alcool isopropylique. Cet essuyage peut éventuellement être suivi d'un nouveau rinçage à l'eau désionisée et d'un essuyage final avec un chiffon.

Le précurseur de revêtement antibuée de l'invention possède de préférence un angle de contact statique avec l'eau strictement supérieur à 10° et strictement inférieur à 50°, de préférence inférieur ou égal à 45°, mieux ≤ 40°, encore mieux ≤ 30° et idéalement ≤ 25°. Cet angle de contact va de préférence de 15° à 40°, mieux de 20° à 30°. Son énergie de surface est de préférence d'au moins 15 mJ/m², mieux d'au moins 25 mJ/m². Ces différentes valeurs sont vérifiées par le précurseur de revêtement antibuée initialement déposé (incluant un excès de composé A), et/ou le précurseur de revêtement antibuée résultant de l'élimination de la couche temporaire de l'invention, de préférence par les deux. Les énergies de surface sont calculées selon la méthode OWENS-WENDT décrite dans la référence : "Estimation of the surface force energy of polymers" OWENS D.K, WENDT R.G. (1969) J. APPL-POLYM-SCI, 13, 1741-1747.

Après le dépôt du composé A conformément à l'invention, la partie externe du revêtement éliminable par essuyage n'est pas éliminée, que ce soit par lavage ou par essuyage, ou bien peut l'être, mais seulement partiellement. Ce revêtement précurseur présenterait donc des problèmes d'adhésion au patin de maintien lors du débordage.

Une couche temporaire selon l'invention comprend au moins un composé choisi parmi les fluorures métalliques et les composés comprenant du magnésium et de l'oxygène et est formée directement sur le revêtement précurseur du revêtement antibuée. De préférence, la couche temporaire comprend au moins 70 % en masse de fluorures métalliques ou de composés comprenant du magnésium et de l'oxygène (de préférence des oxydes de magnésium), par rapport à la masse totale de la couche temporaire,. Elle comprend de préférence au moins 70 % en masse de fluorures métalliques ou au moins 70 % en masse de composés comprenant du magnésium et de l'oxygène (de préférence des oxydes de magnésium), de préférence au moins 80, 90 ou 95 % en masse.

Cette couche temporaire constitue de préférence la couche externe de l'article d'optique, c'est-à-dire sa couche qui est en contact avec l'air. De façon non préférée, d'autres couches temporaires à base de matériaux identiques ou différents peuvent être déposées sur ladite couche temporaire comprenant au moins un composé choisi parmi les fluorures métalliques et les composés comprenant du magnésium et de l'oxygène, de façon à former, par exemple, des bicouches temporaires.

Comme exemple de fluorures métalliques, on peut citer le fluorure de magnésium MgF₂, de lanthane LaF₃, d'aluminium AlF₃, de cérium CeF₃, ZrF₄, CaF₂, Na₅Al₃F₁₄, Na₃AlF₆, BaF₂ CdF₂, HfF₄, LiF, NaF, NdF₃, PbF₂, PrF₃, SrF₂, ThF₄. De préférence on utilisera le fluorure de magnésium, le CeF₃, le Na₅Al₃F₁₄ ou le LaF₃, idéalement le fluorure de magnésium. Parmi les composés comprenant du magnésium et de l'oxygène, on peut utiliser l'hydroxyde de magnésium Mg(OH)₂ ou le MgO, ce dernier étant préféré. L'oxyde de magnésium préféré est le MgO.

Cette couche comprend de préférence au moins 80% en masse d'au moins un composé choisi parmi les fluorures métalliques et les composés comprenant du magnésium et de l'oxygène, par rapport à la masse totale de la couche temporaire, mieux au moins 90%, et encore mieux au moins 95 % en masse. Selon un mode de réalisation de l'invention, la couche temporaire consiste en une couche de fluorures métalliques ou de composés comprenant du magnésium et de l'oxygène (de préférence une couche d'oxydes de magnésium), de préférence de MgF₂ ou de MgO

Lorsque la couche temporaire ne comprend pas uniquement des fluorures métalliques ou des composés comprenant du magnésium et de l'oxygène, elle comprend d'autres matériaux qui sont préférentiellement des matériaux diélectriques tels que des oxydes ou hydroxydes métalliques ou de métalloïdes, préférentiellement de la silice ou de l'alumine (Al₂O₃).

L'épaisseur de la couche temporaire selon l'invention est préférentiellement ≥ 5 nm, mieux ≥ 10 nm et de préférence ≤ 200 nm, mieux ≤ 100 nm et encore mieux ≤ 50 nm. Elle va typiquement de 5 à 200 nm, de préférence de 5 à 100 nm, mieux de 10 à 50 nm.

La couche temporaire présente de préférence un angle de contact statique avec l'eau inférieur à 50°, mieux inférieur à 40°, et encore mieux inférieur à 30°. Son énergie de surface est de préférence d'au moins 15 mJ/m², mieux d'au moins 25 mJ/m².

La couche temporaire peut être déposée par tout procédé classique convenable, en phase vapeur (dépôt sous vide), ou en phase liquide, par exemple par pulvérisation, centrifugation, ou trempage. La couche temporaire est de préférence déposée par voie gazeuse, notamment par évaporation sous vide. En effet, le dépôt par traitement sous vide permet un contrôle précis de l'épaisseur de la couche temporaire et minimise les dispersions, ce qui n'est pas forcément le cas des autres solutions techniques disponibles. En outre, ce traitement sous vide présente l'avantage de pouvoir être directement intégré au procédé industriel de traitement des articles d'optique, en particulier lorsque ceux-ci sont équipés d'un revêtement antireflet.

La couche temporaire est de préférence formée de façon à ce qu'elle recouvre totalement le revêtement précurseur du revêtement antibuée.

Le matériau de la couche temporaire selon l'invention n'altère pas les propriétés de surface du revêtement précurseur du revêtement antibuée, et est susceptible d'être éliminé lors d'une opération ultérieure précédant l'étape de débordage. Le matériau de cette couche temporaire possède aussi une force de cohésion suffisante de façon à ce que le retrait de la couche temporaire s'effectue sans laisser de résidus à la surface du revêtement précurseur du revêtement antibuée.

La couche temporaire utilisée dans la présente invention présente de nombreux avantages. Elle n'affecte pas la transparence de l'article d'optique, de sorte qu'il reste possible d'effectuer sur l'article revêtu de cette couche temporaire des mesures classiques de puissance par un frontofocomètre. Elle peut subir un marquage au moyen d'encres de marquage diverses, communément utilisées par l'homme de l'art pour les verres progressifs.

La couche temporaire selon l'invention présente l'intérêt de pouvoir être éliminée très facilement. L'étape d'élimination de cette couche est réalisée avant une éventuelle étape de débordage, qui sera décrite en détail plus tard. Elle peut être effectuée soit en milieu liquide, soit par essuyage, notamment à sec, soit encore par une mise en oeuvre combinée de ces deux moyens. Cette étape peut être choisie parmi les étapes de lavage et d'essuyage citées plus haut. D'autres méthodes d'élimination en milieu liquide sont décrites notamment dans la demande WO 03/057641. Un essuyage au moyen d'un tissu ou chiffon est la technique d'élimination préférée. Elle est de préférence réalisée manuellement.

L'élimination de la couche temporaire (et de l'excès de composé A déposé) peut être suivie visuellement, puisque cette couche présente un reflet coloré, si son épaisseur n'est pas trop fine. Il est dès lors aisé de différencier les surfaces essuyées des surfaces non essuyées.

Après élimination de la couche temporaire, qui entraîne également l'élimination du surplus du composé A déposé, c'est-à-dire de la partie externe du revêtement précurseur du revêtement antibuée éliminable par essuyage, il ne subsiste à la surface du premier revêtement selon l'invention ou du substrat que la partie interne du revêtement précurseur du revêtement antibuée contenant le composé A effectivement greffé. Les molécules non greffées sont ainsi évacuées.

L'épaisseur du revêtement précurseur du revêtement antibuée restant après cette étape d'élimination est de préférence inférieure ou égale à 5 nm, mieux inférieure ou égale à 3 nm. Le composé A déposé à la surface de l'article d'optique forme donc de préférence une couche monomoléculaire ou quasi-monomoléculaire.

L'un des principaux avantages de l'utilisation de la couche temporaire à base de fluorures métalliques ou de composés comprenant du magnésium et de l'oxygène est qu'elle permet de faciliter l'élimination de l'excès de composé A déposé en divisant par un facteur compris entre 5 et 10 le temps nécessaire pour réaliser cette élimination. Effectivement, l'élimination directe de l'excès de composé A déposé à la surface du premier revêtement ou du substrat, qui se fait généralement par essuyage manuel, est un processus long et fastidieux pour les équipes de production, qui peut s'avérer douloureux sur le long terme. Lorsque cet excès de composé A et la couche temporaire de fluorures métalliques ou de composés comprenant du magnésium et de l'oxygène sont éliminés de façon concomittante, le processus est facile, non douloureux et rapide (temps d'élimination de l'ordre de 5 secondes).

L'invention concerne également un procédé de préparation d'un article d'optique, de préférence une lentille ophtalmique, tel que défini ci-dessus, comprenant :
a) fournir un substrat ayant au moins une surface principale,
b) déposer de préférence par évaporation sous vide sur ladite surface principale du substrat ou sur un premier revêtement, lorsque ladite surface principale du substrat est revêtue d'un premier revêtement, au moins un composé A hydrophile, de façon à obtenir un revêtement précurseur d'un revêtement antibuée comprenant une partie interne dans laquelle ledit composé A est greffé au substrat ou lorsqu'il est présent au premier revêtement, et une partie externe éliminable par lavage et/ou essuyage,
c) déposer directement sur le revêtement précurseur du revêtement antibuée, de préférence par évaporation sous vide, au moins une couche temporaire comprenant au moins un composé choisi parmi les fluorures métalliques et les composés comprenant du magnésium et de l'oxygène,
d) éliminer ladite couche temporaire et la partie externe du revêtement précurseur d'un revêtement antibuée, de préférence par lavage et/ou essuyage.

De préférence, la couche temporaire comprend au moins 70% en masse d'au moins un composé choisi parmi les fluorures métalliques et les composés comprenant du magnésium et de l'oxygène, par rapport à la masse totale de la couche temporaire,

Le procédé de l'invention peut en outre comprendre les étapes suivantes, réalisées après l'élimination de l'excès de composé A déposé, qui en font un procédé de débordage (ou détourage) d'un article d'optique :
e) la fixation de l'article d'optique résultant de l'étape d) à un dispositif de maintien, de préférence au moyen d'un patin adhésif adhérant à la surface de l'article d'optique (glantage) ;
f) le montage du dispositif de maintien auquel adhère l'article d'optique, de préférence par l'intermédiaire du patin adhésif, dans un dispositif de débordage ;
g) le débordage de l'article d'optique par usinage de la périphérie (ou de la tranche) de l'article d'optique ; et
h) la récupération de l'article d'optique débordé (déglantage).

Dans le cas où l'article d'optique est une lentille ophtalmique, l'opération de débordage permet de la conformer aux dimensions et à la forme de la monture de lunette dans laquelle elle est destinée à prendre place.

Le débordage est réalisé généralement sur une meuleuse comprenant des meules diamantées qui effectuent l'usinage tel que défini ci-dessus. La lentille est maintenue, lors de cette opération, par des organes de blocage intervenant axialement.

Pour cela, avant l'opération de débordage, on effectue une opération de glantage de l'article d'optique, c'est à dire que l'on vient positionner sur sa surface (généralement sa surface convexe) un moyen de maintien ou gland. Typiquement, un patin de maintien (ou patin de fixation), tel qu'une pastille autocollante, par exemple un patin adhésif double face, est disposé entre le gland et la surface de l'article d'optique. Le gland auquel adhère l'article d'optique par l'intermédiaire du patin adhésif est alors mécaniquement fixé dans l'axe de montage de la meuleuse et un bras axial vient bloquer l'article d'optique en appliquant une force centrale sur la face de l'article d'optique opposée au gland. Lors de l'usinage, un effort de couple tangentiel est généré sur l'article d'optique.

Dans le procédé de l'invention, l'article d'optique est fermement maintenu au cours de l'opération de débordage, puisque sa surface externe, en contact avec le patin de maintien, est à ce stade une surface hydrophile (à savoir la surface du précurseur du revêtement antibuée), ce qui permet une bonne adhérence, tant normale que tangentielle, à l'interface patin de maintien/surface (convexe) de l'article d'optique. De ce fait, on procède à un débordage fiable en évitant les phénomènes de glissement et de désaxage, ainsi que le phénomène de déglantage intempestif. Ce procédé fournit des articles d'optique ayant subi un désaxage maximum de 2°, et, de façon optimale, inférieur ouégal à 1°.

Les étapes de glantage, déglantage et les systèmes de maintien utilisables au cours de ce procédé, classiques pour l'homme du métier, sont décrits plus en détail dans les demandes EP 1392613 et WO 2010/055261.

Il apparaît donc que la fonction de la couche à base de fluorures métalliques ou de composés comprenant du magnésium et de l'oxygène de l'invention est clairement différente de celle des couches temporaires de fluorures métalliques (typiquement MgF₂) ou d'oxyde de magnésium utilisées par exemple dans les demandes EP 1392613, EP 1633684 et WO 03/057641. Dans ces demandes, les couches temporaires à base de fluorures métalliques ou d'oxyde de magnésium sont formées à la surface d'articles d'optique revêtus de couches externes hydrophobes (généralement fluorées) pour faciliter leur débordage. Selon l'invention, les couches temporaires à base de fluorures métalliques ou de composés comprenant du magnésium et de l'oxygène sont déposées à la surface d'articles d'optique revêtus de couches externes hydrophiles et n'ont pas pour but de faciliter leur débordage. Par revêtement hydrophobe, on entend un revêtement présentant un angle de contact statique avec l'eau supérieur à 60°, de préférence supérieur ou égal à70°, mieux inférieur ou égal à 90°.

Le procédé de l'invention peut aussi comprendre une étape supplémentaire de dépôt d'un film d'une solution liquide contenant au moins un tensioactif à la surface du revêtement précurseur du revêtement antibuée obtenu après l'élimination de la couche temporaire et de la partie externe du revêtement précurseur du revêtement antibuée éliminable par essuyage, donnant ainsi accès à un revêtement antibuée temporaire.

On récupère ainsi un article d'optique possédant d'excellentes propriétés antibuée, ce qui signifie que la couche temporaire selon l'invention n'exerce aucune influence négative sur les propriétés antibuée de l'article. Elle n'affecte pas non plus la durabilité des propriétés du revêtement antibuée.

Cette solution fournit aux verres une protection temporaire contre la buée en créant une couche uniforme à leur surface qui aide à disperser les gouttelettes d'eau sur la surface du verre de sorte qu'elles ne forment pas de buée visible.

L'application de la solution de tensioactif peut être réalisée par toute technique connue, notamment par trempage, centrifugation ou pulvérisation.

La solution de tensioactif est préférentiellement appliquée par dépôt d'une goutte de cette solution à la surface du précurseur du revêtement antibuée puis en l'étalant de façon à couvrir de préférence la totalité dudit revêtement précurseur. La solution de tensioactif appliquée est généralement une solution aqueuse, contenant de préférence de 0,5 à 10%, mieux de 2 à 8% en masse de tensioactif.

Une grande variété de tensioactifs peut être employée. Ceux-ci peuvent être ioniques (cationiques, anioniques ou amphotères) ou non ioniques, de préférence non ioniques ou anioniques. Cependant, un mélange de tensioactifs appartenant à ces différentes catégories est envisageable. De préférence, on utilise un agent tensioactif comportant des groupes poly(oxyalkylène). Une solution de surfactant disponible dans le commerce pour conférer une propriété antibuée est la solution Optifog™ Activator de la société Essilor.

Le revêtement antibuée de l'invention présente de préférence un angle de contact statique avec l'eau inférieur ou égal à 10°, mieuxinférieur ou égal à 5°.

Les exemples suivants illustrent l'invention de façon plus détaillée mais non limitative. Sauf indication contraire, toutes les épaisseurs figurant dans la présente demande sont des épaisseurs physiques.

### EXEMPLES

### 1. Matériaux et articles d'optique utilisés

Le composé organosilane A utilisé dans les exemples pour former le précurseur du revêtement antibuée est le 2-[méthoxy(polyéthylèneoxy)propyl]triméthoxysilane possédant 6 à 9 unités oxyde d'éthylène, de formule (III) et de masse molaire 450-600 g/mol (CAS No. : 65994-07-2, Ref : SIM6492.7, fourni par la société Gelest, Inc.).

Le dispositif d'évaporation sous vide permettant de déposer les différentes couches (antireflet, revêtement précurseur du revêtement anti-buée, couche temporaire) est une machine SATIS 1200 DLF (pression de démarrage, à laquelle le procédé va démarrer : 3,5.10⁻³ Pa).

Les verres utilisés dans les exemples selon l'invention comprennent un substrat de lentille en polycarbonate de bisphénol A (correction -8.00 dioptries, +2.00 cylindre), comportant sur chacune de ses faces un primaire antichoc de polyuréthane d'une épaisseur de l'ordre de 1 micron, lui-même revêtu d'un revêtement anti-abrasion d'une épaisseur de l'ordre de 3 microns en déposant et durcissant une composition telle que définie dans l'exemple 3 du brevet EP 614957, revêtu à son tour d'un revêtement antireflet à cinq couches ZrO₂/SiO₂/ZrO₂/ITO/SiO₂ déposé sur le revêtement anti-abrasion par évaporation sous vide des matériaux dans l'ordre où ils ont été cités (épaisseurs respectives des couches : 29, 23, 68, 6,5 et 85 nm, vitesses de dépôt respectives : 0,32, 0,7, 0,32, 0,13, 1,05 nm/s). Les couches de ZrO₂ sont déposées avec introduction d'O₂ passif (6.10⁻³ Pa) sans assistance ionique. La couche d'ITO est déposée sous assistance ionique d'ions oxygène (2 A, 120 V) sans apport d'O₂ passif. Une couche d'ITO est une couche électriquement conductrice d'oxyde d'indium dopé à l'étain (In₂O₃:Sn).

Avant le dépôt du revêtement antireflet, les verres comportant le revêtement anti-abrasion sont soumis à un traitement d'activation de surface (IPC) qui consiste à effectuer un bombardement ionique avec des ions argon, sous vide, à une pression typiquement de 3,5.10⁻⁵ mbar (1 minute, 3 A, 150 V).

Dans les exemples, le revêtement antireflet n'est soumis à aucun traitement d'activation avant le dépôt du précurseur du revêtement antibuée.

### 2. Dépôt du précurseur du revêtement antibuée en phase vapeur

Le dépôt est réalisé sur le revêtement antireflet des lentilles par évaporation sous vide en utilisant une source thermique à effet Joule. 150 µL de composé siloxane de formule (III) sont versés dans une capsule de cuivre, et cette capsule est déposée sur un support chauffant en tantale conducteur. La pression d'évaporation du composé siloxane de formule (III) varie généralement de 5.10⁻⁴ à 8.10⁻⁴ Pa (vitesse de dépôt : 0,3 nm/s). On obtient une couche de 9 à 15 nm d'épaisseur selon les essais (épaisseur supérieure à celle d'une couche greffée, qui inclut donc le surplus de composé siloxane), possédant un angle de contact statique avec l'eau de 13°.

### 3. Dépôt de la couche temporaire

Une couche temporaire de MgF₂ conforme à l'invention de 20 nm d'épaisseur a été formée sur le revêtement précurseur de revêtement antibuée décrit ci-dessus par évaporation sous vide dans une enceinte à vide (vitesse de dépôt : 0,7 nm/s, P=3.10⁻³ Pa, sans apport de gaz passif ni assistance ionique, durée totale du dépôt : environ 1 minute). On obtient des lentilles ophtalmiques présentant un aspect bleuté (qui disparaîtra après essuyage et/ou lavage). D'autres couleurs sont possibles selon l'épaisseur et l'indice de réfraction de la couche temporaire.

### 4. Elimination de la couche temporaire et de l'excès de composé hydrophile par essuyage

La couche temporaire et l'excès de composé A non greffés sont essuyés manuellement à l'aide d'un chiffon sec de type Wypali^{™} et facilement éliminés (en 5 secondes, sans douleur pour l'opérateur), ce qui permet d'obtenir un verre comportant en tant que couche externe un revêtement précurseur de revêtement antibuée greffé à la surface de la lentille, qui ne présente aucun défaut cosmétique (en particulier, pas d'aspect graisseux).

L'élimination de la couche de fluorures métalliques peut-être suivie visuellement, puisque cette couche est légèrement colorée.

Il a d'autre part été vérifié par XPS (X-Ray Photoelectron Spectroscopy, sur Nova Kratos, Source : Al Kα monochromatisée, angle de détection : normal (θ = 0°), profondeur analysée inférieure à 10 nm, aire analysée : 300 x 700 µm², 225 Watt) qu'après essuyage doux (peu de pression du doigt sur la zone à essuyer pour ôter la couche de MgF₂) avec le chiffon sec, il ne restait plus une trace des éléments F ou Mg initialement présents à la surface de la lentille (seuil de détection : 0,1 % atomique, reproductibilité < 3 %). Ceci prouve qu'un essuyage doux est suffisant :

| **% atomique** | **Mg** | **F** | **Si** | **O** | **C** | **Ratio F/Mg** |
|---|---|---|---|---|---|---|
| **Lentille non essuyée** | 20,1 | 43,2 | 2,0 | 11,8 | 22,9 | 2,1 |
| **Lentille essuyée** | - | | 22,3 | 51,7 | 26,0 | - |

L'utilisation d'une couche temporaire à base de fluorures métalliques simplifie l'élimination de l'excès de composé hydrophile A déposé. Le gain de productivité lors de l'étape d'élimination est d'environ 40 secondes par verre. Outre des articles comprenant la couche temporaire de MgF₂ décrite ci-dessus, d'autres articles ont été préparés, comprenant des couches temporaires de CeF₃, Na₅Al₃F₁₄, LaF₃ et MgO. D'autres articles comprenant une seconde couche temporaire, déposée par évaporation sous vide, de SiO₂, L5 (mélange de SiO₂ et d'Al₂O₃ commercialisé par Umicore Materials AG), SnO₂ ou Al₂O₃ déposée sur la couche temporaire de MgF₂ décrite ci-dessus ont également été préparés. Cette bicouche temporaire a un comportement similaire à la couche temporaire de MgF₂ au niveau de son élimination par essuyage.

En l'absence de ces couches temporaires, l'essuyage est beaucoup plus long (durée de l'ordre de 50 secondes), puisqu'il nécessite pour parvenir à une élimination totale de l'excès de composé A déposé un essuyage de quelques secondes avec un chiffon sec de type Wypall^{™}, puis au moyen d'un tissu Cémoi et enfin avec de l'alcool isopropylique, qui laisse des traces sur les verres. Un essuyage doux n'est pas suffisant, il est nécessaire d'essuyer fortement le verre, ce qui cause des douleurs chez l'opérateur (mains, doigts). En outre, le verre obtenu présente une surface graisseuse.

L'essuyage est de plus parfois aléatoire, puisqu'il n'est pas possible, en l'absence de couche temporaire, de détecter visuellement quels endroits n'ont pas été essuyés, le composé organosilane A formant une couche transparente.

A titre de comparaison, une couche temporaire constituée d'alumine est difficile à éliminer avec un chiffon sec ou humide.

### 5. Formation du revêtement antibuée et évaluation de ses performances

La solution Optifog™ Activator, commercialisée par la société Essilor, contenant des tensioactifs (polyéthylène gycols en solution dans l'isopropanol), est appliquée une seule fois à la surface du verre obtenu dans le § 4.

Le verre est ensuite placé 24 heures dans un environnement régulé en température (20-.25°C) et à une humidité de 50 %, puis placé 15 secondes au dessus d'un récipient chauffé contenant de l'eau à 55°C. Immédiatement après, une échelle d'acuité visuelle située à 5 m est observée à travers le verre testé. Un observateur ayant une vision de 10/10 et ayant le verre placé devant son oeil obtient une acuité visuelle de 10/10^{ème} (en transmission, tableau Optotype de Snellen placé à 5 mètres, échelle Armaignac Tridents, réf. T6 disponible chez FAX INTERNATIONAL), et n'observe ni buée ni distorsion visuelle. Ce test permet de simuler les conditions de vie courante où un porteur place son visage au dessus de son thé, café ou d'une casserole d'eau bouillante.

Il est à noter que des matériaux tels que l'alumine ou l'oxyde d'étain, lorsqu'ils sont utilisés purs, comme couche temporaire, nuisent aux performances antibuée du verre, ce qui pourrait s'expliquer par une contamination ou un arrachement du précurseur de revêtement antibuée lors de l'élimination de la couche temporaire.

### 6. Débordage de la lentille

Le verre obtenu dans le § 4 est débordé sur une meuleuse Essilor Kappa. Au cours de cette opération, le patin de maintien adhésif employé (LEAP II de diamètre 24 mm GAM200 de la société 3M) est directement en contact avec la surface du précurseur du revêtement antibuée greffé. La lentille selon l'invention ne subit aucun désaxage (le protocole de mesure du désaxage subi par les lentilles au cours de cette opération est décrit en détail dans la demande WO 2009/071818).

Il est à noter que contrairement aux couches temporaires de MgF₂ ou de silice décrites dans les demandes PCT/FR2012/051044, EP 1392613, EP 1633684 et WO 03/057641, dont la présence à la surface de l'article d'optique est impérative pendant l'étape de débordage, la couche temporaire de MgF₂ de l'invention, déposée sur un excès de composé organosilane A non greffé, est éliminée avant de procéder au débordage, car la tenue du patin de maintien est mauvaise à la surface de cette couche, provoquant un déglantage intempestif au cours du débordage. Ainsi, la lentille obtenue dans le § 3 échoue lors d'un test de déglantage consistant à observer la tenue d'un ensemble gland + patin de maintien collé sur la face convexe de la lentille, cet ensemble étant soumis à un arrosage d'eau du robinet (eau à 25°C) pendant 45 secondes, de façon à reproduire l'exposition à l'eau couramment utilisée au cours du débordage.

Il est à noter également que l'on ne peut pas non plus procéder au débordage direct de la lentille obtenue dans le § 2 (lentille comportant en tant que couche externe un précurseur de revêtement antibuée déposé en excès sans couche temporaire), qui ne permet pas une bonne tenue du patin et entraîne un glissement de l'article pendant l'opération de débordage.

## Revendications

1. Article d'optique comprenant un substrat ayant au moins une surface principale et un revêtement précurseur d'un revêtement antibuée, ledit revêtement précurseur étant en contact direct soit avec ladite surface principale du substrat, soit avec un premier revêtement, lorsque ladite surface principale du substrat est revêtue d'un premier revêtement, ledit revêtement précurseur étant formé par dépôt sur le substrat, ou lorsqu'il est présent sur le premier revêtement, d'au moins un composé A hydrophile,
**caractérisé en ce que** ledit revêtement précurseur comprend une partie interne dans laquelle ledit composé A est greffé au substrat ou lorsqu'il est présent au premier revêtement, et une partie externe éliminable par lavage et/ou essuyage, résultant du dépôt du composé A,
et **en ce que** ledit revêtement précurseur est revêtu d'une couche temporaire, en contact direct avec lui, comprenant au moins un composé choisi parmi les fluorures métalliques et les composés comprenant du magnésium et de l'oxygène.

2. Article d'optique selon la revendication 1, **caractérisé en ce que** la couche temporaire comprend au moins 70%, de préférence au moins 80%, mieux au moins 90% en masse d'au moins un composé choisi parmi les fluorures métalliques et les composés comprenant du magnésium et de l'oxygène, par rapport à la masse totale de la couche temporaire

3. Article d'optique selon l'une quelconque des revendications précédentes, **caractérisé en ce que** la couche temporaire comprend au moins un composé choisi parmi les fluorures métalliques et les oxydes de magnésium.

4. Article d'optique selon l'une quelconque des revendications précédentes, **caractérisé en ce que** la couche temporaire comprend au moins 70%, de préférence au moins 80%, mieux au moins 90% en masse de MgF₂, par rapport à la masse totale de la couche temporaire.

5. Article d'optique selon l'une quelconque des revendications précédentes, **caractérisé en ce que** la couche temporaire consiste en une couche de MgF₂.

6. Article d'optique selon l'une quelconque des revendications précédentes, **caractérisé en ce que** la couche temporaire constitue la couche externe de l'article d'optique.

7. Article d'optique selon l'une quelconque des revendications précédentes, **caractérisé en ce que** la couche temporaire a une épaisseur allant de 5 à 200 nm, de préférence de 10 à 50 nm.

8. Article d'optique selon l'une quelconque des revendications précédentes, **caractérisé en ce que** le revêtement précurseur du revêtement antibuée a une épaisseur allant de 3 à 100 nm, de préférence de 5 à 50 nm.

9. Article d'optique selon l'une quelconque des revendications précédentes, **caractérisé en ce que** le composé A comporte au moins un groupe polyoxyalkylène.

10. Article d'optique selon l'une quelconque des revendications précédentes, **caractérisé en ce que** le composé A est un organosilane ayant au moins un atome de silicium porteur d'au moins un groupe hydrolysable.

11. Article d'optique selon la revendication 10, **caractérisé en ce que** le composé organosilane est un composé de formule :
R¹Yₘ(X)₃₋ₘ (I)
dans laquelle les groupes Y, identiques ou différents, sont des groupes organiques monovalents liés au silicium par un atome de carbone, les groupes X, identiques ou différents, sont des groupes hydrolysables ou des groupes hydroxyle, R¹ est un groupe comprenant une fonction polyoxyalkylène, m est un entier égal à 0, 1 ou 2.

12. Article d'optique selon l'une quelconque des revendications précédentes, **caractérisé en ce que** le revêtement précurseur du revêtement antibuée a une énergie de surface supérieure ou égale à 15 mJ/m².

13. Article d'optique selon l'une quelconque des revendications précédentes, **caractérisé en ce que** le substrat a au moins une de ses surfaces principales revêtue d'un premier revêtement, ledit premier revêtement étant un revêtement antireflet monocouche ou multicouche ou un revêtement anti-abrasion et/ou anti-rayure.

14. Article d'optique selon l'une quelconque des revendications précédentes, **caractérisé en ce qu'**il constitue une lentille optique, de préférence une lentille ophtalmique.

15. Procédé de préparation d'un article d'optique, comprenant :
a) fournir un substrat ayant au moins une surface principale,
b) déposer de préférence par évaporation sous vide sur ladite surface principale du substrat ou sur un premier revêtement, lorsque ladite surface principale du substrat est revêtue d'un premier revêtement, au moins un composé A hydrophile, de façon à obtenir un revêtement précurseur d'un revêtement antibuée comprenant une partie interne dans laquelle ledit composé A est greffé au substrat ou lorsqu'il est présent au premier revêtement, et une partie externe éliminable par lavage et/ou essuyage,
c) déposer directement sur le revêtement précurseur du revêtement antibuée, de préférence par évaporation sous vide, au moins une couche temporaire telle que définie dans l'une quelconque des revendications 1 à 7,
d) éliminer ladite couche temporaire et ladite partie externe du revêtement précurseur d'un revêtement antibuée, de préférence par lavage et/ou essuyage.

16. Procédé selon la revendication 15, **caractérisé en ce qu'**il comprend en outre les étapes suivantes :
e) fixer l'article d'optique résultant de l'étape d) à un dispositif de maintien, de préférence au moyen d'un patin adhésif adhérant à la surface de l'article d'optique (glantage),
f) monter le dispositif de maintien auquel adhère l'article d'optique, de préférence par l'intermédiaire du patin adhésif, dans un dispositif de débordage ;
g) déborder l'article d'optique par usinage de la périphérie ou de la tranche de l'article d'optique ; et
h) récupérer l'article d'optique débordé.

17. Procédé selon l'une quelconque des revendications 15 ou 16 **caractérisé en ce que** l'épaisseur du revêtement précurseur du revêtement antibuée après l'élimination de la couche temporaire est inférieure ou égale à 5 nm, de préférence inférieure ou égale à 3 nm.

## Patentansprüche

1. Optischer Artikel, umfassend ein Substrat, das mindestens eine Hauptfläche und eine Vorläuferbeschichtung einer Antibeschlagsbeschichtung aufweist, wobei die Vorläuferbeschichtung in direktem Kontakt sowohl mit der Hauptfläche des Substrats als auch mit einer ersten Beschichtung ist, wenn die Hauptfläche des Substrats mit einer ersten Beschichtung beschichtet ist, wobei die Vorläuferbeschichtung durch Abscheiden auf das Substrat oder, falls vorhanden, auf die erste Beschichtung von mindestens einer hydrophilen Verbindung A gebildet ist,
**dadurch gekennzeichnet, dass** die Vorläuferbeschichtung einen inneren Teil, in dem die Verbindung A auf das Substrat, oder, falls vorhanden, auf die erste Beschichtung aufgepfropft ist, und einen äußeren Teil aufweist, der durch Abwaschen und/oder Abwischen entfernbar ist, der sich aus dem Abscheiden der Verbindung A ergibt,
und dass die Vorläuferbeschichtung mit einer temporären Beschichtung in direktem Kontakt mit ihr beschichtet ist, umfassend mindestens eine Verbindung, die aus Metallfluoriden und den Verbindungen enthaltend Magnesium und Sauerstoff ausgewählt ist.

2. Optischer Artikel nach Anspruch 1, **dadurch gekennzeichnet, dass** die temporäre Beschichtung mindestens 70, vorzugsweise mindestens 80, insbesondere mindestens 90 Gew.-% von mindestens einer Verbindung, die aus Metallfluoriden und den Verbindungen enthaltend Magnesium und Sauerstoff ausgewählt ist, bezogen auf das Gesamtgewicht der temporären Beschichtung aufweist.

3. Optischer Artikel nach einem der vorhergehenden Ansprüche, **dadurch gekennzeichnet, dass** die temporäre Beschichtung mindestens eine Verbindung aufweist, die aus den Metallfluoriden und den Magnesiumoxiden ausgewählt ist.

4. Optischer Artikel nach einem der vorhergehenden Ansprüche, **dadurch gekennzeichnet, dass** die temporäre Beschichtung mindestens 70, vorzugsweise mindestens 80, insbesondere mindestens 90 Gew.-% MgF₂ bezogen auf das Gesamtgewicht der temporären Beschichtung aufweist.

5. Optischer Artikel nach einem der vorhergehenden Ansprüche, **dadurch gekennzeichnet, dass** die temporäre Beschichtung aus einer Schicht MgF₂ besteht.

6. Optischer Artikel nach einem der vorhergehenden Ansprüche, **dadurch gekennzeichnet, dass** die temporäre Beschichtung die äußere Schicht des optischen Artikels bildet.

7. Optischer Artikel nach einem der vorhergehenden Ansprüche, **dadurch gekennzeichnet, dass** die temporäre Beschichtung eine Dicke im Bereich von 5 bis 200 nm, vorzugsweise von 10 bis 50 nm aufweist.

8. Optischer Artikel nach einem der vorhergehenden Ansprüche, **dadurch gekennzeichnet, dass** die Vorläuferbeschichtung der Antibeschlagsbeschichtung eine Dicke im Bereich von 3 bis 100 nm, vorzugsweise von 5 bis 50 nm aufweist.

9. Optischer Artikel nach einem der vorhergehenden Ansprüche, **dadurch gekennzeichnet, dass** die Verbindung A mindestens eine Polyoxyalkylengruppe umfasst.

10. Optischer Artikel nach einem der vorhergehenden Ansprüche, **dadurch gekennzeichnet, dass** die Verbindung A ein Organosilan ist, das mindestens ein Siliciumatom mit mindestens einer hydrolysierbaren Gruppe aufweist.

11. Optischer Artikel nach Anspruch 10, **dadurch gekennzeichnet, dass** die Organosilanverbindung eine Verbindung der folgenden Formel ist:
R¹YₘSi(X)₃₋ₘ (I)
wobei die Gruppen Y, die gleich oder verschieden sind, einwertige organische Gruppen sind, die an Silizium mittels eines Kohlenstoffatoms gebunden sind, die Gruppen X, die gleich oder verschieden sind, hydrolysierbare Gruppen oder Hydroxylgruppen sind, R¹ eine Gruppe ist, die eine Polyoxyalkylenfunktion umfasst, m eine ganze Zahl ist, die gleich 0, 1 oder 2 ist.

12. Optischer Artikel nach einem der vorhergehenden Ansprüche, **dadurch gekennzeichnet, dass** die Vorläuferbeschichtung der Antibeschlagsbeschichtung eine Oberflächenenergie aufweist, die größer oder gleich 15 mJ/m² ist.

13. Optischer Artikel nach einem der vorhergehenden Ansprüche, **dadurch gekennzeichnet, dass** das Substrat mindestens eine seiner Hauptflächen aufweist, die mit einer ersten Beschichtung beschichtet ist, wobei die erste Beschichtung eine einschichtige oder mehrschichtige Antireflektionsbeschichtung oder eine abriebfeste und/oder kratzfeste Beschichtung ist.

14. Optischer Artikel nach einem der vorhergehenden Ansprüche, **dadurch gekennzeichnet, dass** er eine optische Linse, vorzugsweise eine ophthalmische Linse darstellt.

15. Verfahren zur Herstellung eines optischen Artikels, umfassend:
a) Bereitstellen eines Substrats, das mindestens eine Hauptfläche aufweist,
b) Auftragen durch Vakuumverdampfung auf die Hauptfläche des Substrats oder auf eine erste Beschichtung, wenn die Hauptfläche des Substrats mit einer ersten Beschichtung beschichtet ist, von mindestens einer hydrophilen Verbindung A, derart, dass eine Vorläuferbeschichtung einer Antibeschlagsbeschichtung erhalten wird, die einen inneren Teil, in dem die Verbindung A auf das Substrat, oder, falls vorhanden, auf die erste Beschichtung aufgepfropft wird, und einen äußeren Teil aufweist, der durch Abwaschen und/oder Abwischen entfernbar ist,
c) direktes Auftragen auf die Vorläuferbeschichtung der Antibeschlagsbeschichtung, vorzugsweise durch Vakuumverdampfung, von mindestens einer temporären Beschichtung, wie in einem der Ansprüche 1 bis 7 definiert,
d) Entfernen der temporären Beschichtung und des äußeren Teils der Vorläuferbeschichtung einer Antibeschlagsbeschichtung, vorzugsweise durch Abwaschen und/oder Abwischen.

16. Verfahren nach Anspruch 15, **dadurch gekennzeichnet, dass** es ferner die folgenden Schritte aufweist:
e) Befestigen des optischen Artikels, der aus dem Schritt d) hervorgeht, an einer Haltevorrichtung, vorzugsweise mittels eines Klebepads, das an der Fläche des optischen Artikels haftet (Aufkitten),
f) Montieren der Haltevorrichtung, an der der optische Artikel haftet, vorzugsweise durch das Klebepad, in eine Vorrichtung zum Beschneiden;
g) Beschneiden des optischen Artikels durch Bearbeiten des Umfangs oder des Randes des optischen Artikels; und
h) Abnehmen des beschnittenen optischen Artikels.

17. Verfahren nach einem der vorhergehenden Ansprüche 15 oder 16, **dadurch gekennzeichnet, dass** die Dicke der Vorläuferbeschichtung der Antibeschlagsbeschichtung nach dem Entfernen der temporären Beschichtung niedriger als oder gleich 5 nm, vorzugsweise niedriger als oder gleich 3 nm ist.

## Claims

1. An optical article comprising a substrate having at least one main surface and a precursor coating for an antifogging coating, said precursor coating being in direct contact either with said main surface of the substrate, or with a first coating, when said main surface of the substrate is coated with a first coating, said precursor coating being formed by depositing at least one hydrophilic compound A on the substrate or, when it is present, on the first coating,
**characterized in that** said precursor coating comprises an internal part in which said compound A is grafted to the substrate or, when it is present, to the first coating, and an external part that can be removed by washing and/or wiping, resulting from the deposition of the compound A,
and **in that** said precursor coating is coated with a temporary layer, in direct contact with it, comprising at least one compound selected from metal fluorides and compounds comprising magnesium and oxygen.

2. The optical article as claimed in claim 1, **characterized in that** the temporary layer comprises at least 70%, preferably at least 80%, better still at least 90% by weight of at least one compound selected from metal fluorides and compounds comprising magnesium and oxygen, with respect to the total weight of the temporary layer.

3. The optical article as claimed in either of the preceding claims, **characterized in that** the temporary layer comprises at least one compound selected from metal fluorides and magnesium oxides.

4. The optical article as claimed in any one of the preceding claims, **characterized in that** the temporary layer comprises at least 70%, preferably at least 80%, better still at least 90% by weight of MgF₂, with respect to the total weight of the temporary layer.

5. The optical article as claimed in any one of the preceding claims, **characterized in that** the temporary layer consists of a layer of MgF₂.

6. The optical article as claimed in any one of the preceding claims, **characterized in that** the temporary layer forms the external layer of the optical article.

7. The optical article as claimed in any one of the preceding claims, **characterized in that** the temporary layer has a thickness ranging from 5 to 200 nm, preferably from 10 to 50 nm.

8. The optical article as claimed in any one of the preceding claims, **characterized in that** the precursor coating for the antifogging coating has a thickness ranging from 3 to 100 nm, preferably from 5 to 50 nm.

9. The optical article as claimed in any one of the preceding claims, **characterized in that** the compound A contains at least one polyoxyalkylene group.

10. The optical article as claimed in any one of the preceding claims, **characterized in that** the compound A is an organosilane having at least one silicon atom bearing at least one hydrolyzable group.

11. The optical article as claimed in claim 10, **characterized in that** the organosilane compound is a compound of formula:
R¹YₘSi(X)₃₋ₘ (I)
wherein the Y groups, which are identical or different, are monovalent organic groups bonded to the silicon via a carbon atom, the X groups, which are identical or different, are hydrolyzable groups or hydroxyl groups, R¹ is a group comprising a polyoxyalkylene functional group and m is an integer equal to 0, 1 or 2.

12. The optical article as claimed in any one of the preceding claims, **characterized in that** the precursor coating for the antifogging coating has a surface energy of greater than or equal to 15 mJ/m².

13. The optical article as claimed in any one of the preceding claims, **characterized in that** at least one of the main surfaces of the substrate is coated with a first coating, said first coating being a single-layer or multilayer antireflective coating, or an abrasion-resistant and/or scratch-resistant coating.

14. The optical article as claimed in any one of the preceding claims, **characterized in that** it constitutes an optical lens, preferably an ophthalmic lens.

15. A process for preparing an optical article, comprising:
a) providing a substrate having at least one main surface,
b) depositing, preferably by vacuum evaporation, on said main surface of the substrate or on a first coating, when said main surface of the substrate is coated with a first coating, at least one hydrophilic compound A, so as to obtain a precursor coating for an antifogging coating that comprises an internal part in which said compound A is grafted to the substrate or, when it is present, to the first coating, and an external part that can be removed by washing and/or wiping,
c) depositing directly on the precursor coating for the antifogging coating, preferably by vacuum evaporation, at least one temporary layer as defined in any one of claims 1 to 7,
d) removing said temporary layer and said external part of the precursor coating for an antifogging coating, preferably by washing and/or wiping.

16. The process as claimed in claim 15, **characterized in that** it furthermore comprises the following steps:
e) attaching the optical article resulting from step d) to a holding device, preferably by means of an adhesive pad which adheres to the surface of the optical article (blocking);
f) mounting the holding device to which the optical article adheres, preferably via the adhesive pad, in an edging device;
g) edging the optical article by machining the periphery or the edge of the optical article;
and
h) recovering the edged optical article.

17. The process as claimed in either one of claims 15 and 16, **characterized in that** the thickness of the precursor coating for the antifogging coating, after the removal of the temporary layer, is less than or equal to 5 nm, preferably less than or equal to 3 nm.
